# EUROPEAN PATENT APPLICATION

(11) **EP 4 836 008 A1**
(43) Date of publication of application: **04.11.2026**
(21) Application number: 25880411.1
(22) Date of filing: 17.10.2025
(51) Int. Cl.: H01M 4/525, H01M 4/131, H01M 10/052, H01M 4/02

(54) **POSITIVE ELECTRODE ACTIVE MATERIAL AND LITHIUM SECONDARY BATTERY COMPRISING SAME**

(30) Priority: 18.10.2024 KR 20240142838
(71) Applicant: EcoPro BM Co., Ltd, Cheongju-si, Chungcheongbuk-do 28116 (KR)
(72) Inventor: KIM, Ha Young, Cheongju-si, Chungcheongbuk-do 28116 (KR); JO, Min Su, Cheongju-si, Chungcheongbuk-do 28116 (KR); LEE, Jae Kyun, Cheongju-si, Chungcheongbuk-do 28116 (KR); CHOI, Byeong Kil, Cheongju-si, Chungcheongbuk-do 28116 (KR)
(74) Representative: Vossius & Partner Patentanwälte Rechtsanwälte mbB
(86) International application number: PCT/KR2025/016515
(87) International publication number: WO 2026/084529

(57) **Abstract**

The present specification relates to a positive electrode active material and a lithium secondary battery comprising the same, and more particularly, to a positive electrode active material comprising a lithium composite oxide, wherein the lithium composite oxide is in the form of a secondary particle in which a plurality of primary particles are aggregated, and wherein it is possible to improve structural stability of a surface of the particle by forming a concentration gradient of an Al element in a region close to the surface of one or more of the primary particles, and a lithium secondary battery comprising the same.

## Description

### BACKGROUND

### 1. Field of the Invention

The present specification relates to a positive electrode active material and a lithium secondary battery comprising the same, and more particularly, to a positive electrode active material comprising a lithium composite oxide, wherein the lithium composite oxide is in the form of secondary particles in which a plurality of primary particles are aggregated, and a concentration gradient of an Al element is formed in a region close to the surface of one or more of the primary particles, so that the structural stability of the particle surface can be improved, and a lithium secondary battery comprising the same.

### 2. Discussion of Related Art

Batteries store power by using materials capable of undergoing electrochemical reactions at a positive electrode and a negative electrode. A representative example of batteries is a lithium secondary battery that stores electrical energy by the difference in chemical potential when lithium ions are intercalated/deintercalated into/from the positive electrode and the negative electrode.

The lithium secondary battery is manufactured by using materials capable of reversible intercalation/deintercalation of lithium ions as positive and negative electrode active materials and filling an organic electrolyte or a polymer electrolyte between the positive and negative electrodes.

A lithium composite oxide is used as a positive electrode active material for a lithium secondary battery, and as an example, composite oxides such as LiCoO₂, LiMn₂O₄, LiNiO₂, LiMnO₂, and the like are being studied.

Among the positive electrode active materials, LiCoO₂ is the most widely used due to its excellent lifetime characteristics and charge/discharge efficiency, but it has limitations in price competitiveness because cobalt, which is used as a raw material, is expensive due to resource constraints.

Lithium manganese oxides such as LiMnO₂ and LiMn₂O₄ have advantages of excellent thermal safety and low price, but also have problems of low capacity and poor high-temperature characteristics. In addition, a LiNiO₂-based positive electrode active material exhibits battery characteristics such as high discharge capacity, but it is difficult to synthesize the LiNiO₂-based positive electrode active material due to cation mixing between Li and transition metals, thereby causing significant problems in rate characteristics.

Therefore, in order to improve the low rate and cycle characteristics of LiNiO₂ while maintaining its high reversible capacity, ternary lithium composite oxides such as the so-called NCM (Ni-Co-Mn) and NCA (Ni-Co-Al), in which part of the nickel is substituted with cobalt, manganese, and/or aluminum, or quaternary lithium composite oxides such as NCMA (Ni-Co-Mn-Al) have been developed. Since the reversible capacity is reduced as the nickel content in the ternary or quaternary lithium composite oxide decreases, research has been widely conducted to increase the nickel content in the lithium composite oxide.

However, as the content of nickel in the lithium transition metal oxide increases, cation mixing increases in the crystal structure, thereby reducing stability or increasing the content of unreacted lithium impurities such as LiOH and Li₂CO₃ on the surface. As the content of lithium impurities remaining on the surface of the lithium transition metal oxide increases, gas generation and swelling may be promoted in a lithium secondary battery using the lithium transition metal oxide as a positive electrode active material. As the content of lithium impurities remaining on the surface of the lithium transition metal oxide increases, a paste composition becomes gel-like due to lithium impurities when a paste for forming a positive electrode active material layer is prepared using the lithium transition metal oxide.

### SUMMARY OF THE INVENTION

In the lithium secondary battery market, while growth of lithium secondary batteries for electric vehicles is driving the market, demand for a positive electrode material used in the lithium secondary battery is also continuously changing.

For example, in the past, lithium secondary batteries using lithium iron phosphate (LFP) have mainly been used from the viewpoint of ensuring safety, but recently, use of nickel-based lithium transition metal oxide having a higher energy capacity per weight compared to LFP has been increasing.

Accordingly, a positive electrode active material used in a higher-specification lithium secondary battery needs to appropriately satisfy both expected stability and reliability even under more severe operating conditions.

Considering these various environments, an object of the present specification is to provide a positive electrode active material comprising a lithium composite oxide containing at least aluminum and a transition metal, wherein the aluminum is doped in the lithium composite oxide and forms a concentration gradient on at least a part of the surface of the primary particles of the lithium composite oxide, so that the structural stability of the surface portion is improved.

In addition, the present disclosure is also directed to providing a lithium secondary battery using the positive electrode active material defined herein.

The objects of the present disclosure are not limited to the above-described objects, and other objects and advantages of the present disclosure that are not described can be understood by the following description and will be more clearly understood by the embodiments of the present disclosure. In addition, it is apparent that the objects and advantages of the present disclosure can be realized by the means and combinations thereof indicated in the claims.

According to an aspect of the present specification, there is provided a positive electrode active material comprising a lithium composite oxide capable of intercalation/deintercalation of lithium, wherein the lithium composite oxide comprises at least lithium, aluminum, and a transition metal, the lithium composite oxide is a secondary particle in which a plurality of primary particles are aggregated, and the Al element contained in one or more of the primary particles exhibits a concentration gradient that decreases toward the center of the primary particles.

In an embodiment, at least a part of the Al element in the lithium composite oxide may be present in a doped state in the primary particles.

Meanwhile, the concentration gradient of the Al element may be present only up to a predetermined depth from the surface of the primary particles. For example, when the diameter of the primary particles is r, the predetermined depth may be 0.001r, 0.002r, 0.003r, 0.004r, 0.005r, 0.006r, 0.007r, 0.008r, 0.009r, 0.01r, 0.011r, 0.012r, 0.013r, 0.014r, 0.015r, 0.016r, 0.017r, 0.018r, 0.019r, 0.02r, 0.021r, 0.022r, 0.023r, 0.024r, 0.025r, 0.026r, 0.027r, 0.028r, 0.029r, 0.03r, 0.035r, 0.04r, 0.045r, 0.05r, 0.055r, 0.06r, 0.065r, 0.07r, 0.075r, 0.08r, 0.085r, 0.09r, 0.095r, 0.1r, 0.105r, 0.11r, 0.115r, 0.12r, 0.125r, 0.13r, 0.135r, 0.14r, 0.145r, 0.15r, 0.155r, 0.16r, 0.165r, 0.17r, 0.175r, 0.18r, 0.185r, 0.19r, 0.195r, 0.2r, or a range between two of these values, but is not limited thereto.

Meanwhile, the depth of the Al element concentration gradient formed in the major axis direction of the primary particles and the depth of the Al element concentration gradient formed in the minor axis direction of the primary particles may be different from or the same as each other.

In an example, in the primary particles, the thickness of the concentration gradient layer in which the Al element exhibits a concentration gradient that decreases toward the center of the primary particles is 0.1 to 200 nm, for example, 0.1 nm, 0.5 nm, 1 nm, 1.5 nm, 2 nm, 2.5 nm, 3 nm, 3.5 nm, 4 nm, 4.5 nm, 5 nm, 5.5 nm, 6 nm, 6.5 nm, 7 nm, 7.5 nm, 8 nm, 8.5 nm, 9 nm, 9.5 nm, 10 nm, 10.5 nm, 11 nm, 11.5 nm, 12 nm, 12.5 nm, 13 nm, 13.5 nm, 14 nm, 14.5 nm, 15 nm, 15.5 nm, 16 nm, 16.5 nm, 17 nm, 17.5 nm, 18 nm, 18.5 nm, 19 nm, 19.5 nm, 20 nm, 20.5 nm, 21 nm, 21.5 nm, 22 nm, 22.5 nm, 23 nm, 23.5 nm, 24 nm, 24.5 nm, 25 nm, 25.5 nm, 26 nm, 26.5 nm, 27 nm, 27.5 nm, 28 nm, 28.5 nm, 29 nm, 29.5 nm, 30 nm, 40 nm, 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, 200 nm, or a range between two of these values, but is not limited thereto.

Here, in one or more of the primary particles, a region in which the Al element is concentrated may be present at a depth of 0.1 to 200 nm from the surface of the primary particles toward the center of the primary particles, for example, 0.1 nm, 0.5 nm, 1 nm, 1.5 nm, 2 nm, 2.5 nm, 3 nm, 3.5 nm, 4 nm, 4.5 nm, 5 nm, 5.5 nm, 6 nm, 6.5 nm, 7 nm, 7.5 nm, 8 nm, 8.5 nm, 9 nm, 9.5 nm, 10 nm, 10.5 nm, 11 nm, 11.5 nm, 12 nm, 12.5 nm, 13 nm, 13.5 nm, 14 nm, 14.5 nm, 15 nm, 15.5 nm, 16 nm, 16.5 nm, 17 nm, 17.5 nm, 18 nm, 18.5 nm, 19 nm, 19.5 nm, 20 nm, 20.5 nm, 21 nm, 21.5 nm, 22 nm, 22.5 nm, 23 nm, 23.5 nm, 24 nm, 24.5 nm, 25 nm, 25.5 nm, 26 nm, 26.5 nm, 27 nm, 27.5 nm, 28 nm, 28.5 nm, 29 nm, 29.5 nm, 30 nm, 40 nm, 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, 200 nm, or a range between two of these values.

In addition, in one or more of the primary particles, at least one of the transition metal elements, excluding the Al element, may exhibit a concentration gradient that increases toward the center of the primary particles.

Meanwhile, the concentration gradient of the transition metal element may be present only up to a predetermined depth from the surface of the primary particles. For example, when the diameter of the primary particles is r, the predetermined depth may be 0.001r, 0.002r, 0.003r, 0.004r, 0.005r, 0.006r, 0.007r, 0.008r, 0.009r, 0.01r, 0.011r, 0.012r, 0.013r, 0.014r, 0.015r, 0.016r, 0.017r, 0.018r, 0.019r, 0.02r, 0.021r, 0.022r, 0.023r, 0.024r, 0.025r, 0.026r, 0.027r, 0.028r, 0.029r, 0.03r, 0.035r, 0.04r, 0.045r, 0.05r, 0.055r, 0.06r, 0.065r, 0.07r, 0.075r, 0.08r, 0.085r, 0.09r, 0.095r, 0.1r, 0.105r, 0.11r, 0.115r, 0.12r, 0.125r, 0.13r, 0.135r, 0.14r, 0.145r, 0.15r, 0.155r, 0.16r, 0.165r, 0.17r, 0.175r, 0.18r, 0.185r, 0.19r, 0.195r, 0.2r, or a range between two of these values, but is not limited thereto.

In addition, the average particle diameter (D₅₀) of the primary particles may be 200 to 2,000 nm, for example, 200 nm, 225 nm, 250 nm, 275 nm, 300 nm, 325 nm, 350 nm, 375 nm, 400 nm, 425 nm, 450 nm, 475 nm, 500 nm, 525 nm, 550 nm, 575 nm, 600 nm, 625 nm, 650 nm, 675 nm, 700 nm, 725 nm, 750 nm, 775 nm, 800 nm, 825 nm, 850 nm, 875 nm, 900 nm, 925 nm, 950 nm, 975 nm, 1,000 nm, 1,025 nm, 1,050 nm, 1,075 nm, 1,100 nm, 1,125 nm, 1,150 nm, 1,175 nm, 1,200 nm, 1,225 nm, 1,250 nm, 1,275 nm, 1,300 nm, 1,325 nm, 1,350 nm, 1,375 nm, 1,400 nm, 1,425 nm, 1,450 nm, 1,475 nm, 1,500 nm, 1,525 nm, 1,550 nm, 1,575 nm, 1,600 nm, 1,625 nm, 1,650 nm, 1,675 nm, 1,700 nm, 1,725 nm, 1,750 nm, 1,775 nm, 1,800 nm, 1,825 nm, 1,850 nm, 1,875 nm, 1,900 nm, 1,925 nm, 1,950 nm, 1,975 nm, 2,000 nm, or a range between two of these values.

In an embodiment, the lithium composite oxide may be represented by Chemical Formula 1 below:

[Chemical Formula 1] Li_{w}Ni_{1-(x+y+z)}M1ₓM2_{y}Al_{z}O₂

In Chemical Formula 1, M1 is at least one selected from Co and Mn, M2 is at least one selected from Na, K, Mg, Ba, B, Ce, Hf, Ta, Cr, F, Ti, V, Fe, Zr, Zn, Si, Y, Nb, Ga, Sn, Mo, W, P, Sr, Ge, Nd, Gd, and Cu, and 0.5≤w≤1.5, 0<x≤0.34, 0≤y≤0.20, 0<z≤0.33. Here, w may be 0.50, 0.55, 0.60, 0.65, 0.70, 0.75, 0.80, 0.85, 0.90, 0.95, 1.00, 1.05, 1.10, 1.15, 1.20, 1.25, 1.30, 1.35, 1.40, 1.45, 1.50, or a range between two of these values; x may be 0.01, 0.04, 0.07, 0.10, 0.13, 0.16, 0.19, 0.22, 0.25, 0.28, 0.31, 0.34, or a range between two of these values; y may be 0.00, 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, or a range between two of these values; and z may be 0.01, 0.04, 0.07, 0.10, 0.13, 0.16, 0.19, 0.22, 0.25, 0.28, 0.31, 0.33, or a range between two of these values.

Meanwhile, a coating layer comprising lithium and aluminum may be formed on at least a part of the surface of one or more of the secondary particles.

In an example, the coating layer may comprise a lithium-aluminum-based oxide represented by Chemical Formula 2 below:

[Chemical Formula 2] LiₐAl_{b}M3_{c}O_{d}

In Chemical Formula 2, M3 is at least one selected from Ni, Mn, Co, Fe, Cu, Nb, Mo, Ti, W, Cr, Zr, Zn, Na, K, Ca, Mg, Pt, Au, B, P, Eu, Sm, Ce, V, Ba, Ta, Sn, Hf, Ce, Gd, and Nd, and 0<a≤10, 0<b≤8, 0≤c≤8, 2≤d≤13. a may be 0.01, 0.5, 1, 1.5, 2, 2.5, 3, 3.5, 4, 4.5, 5, 5.5, 6, 6.5, 7, 7.5, 8, 8.5, 9, 9.5, 10, or a range between two of these values; b may be 0.01, 0.5, 1, 1.5, 2, 2.5, 3, 3.5, 4, 4.5, 5, 5.5, 6, 6.5, 7, 7.5, 8, or a range between two of these values; c may be 0, 0.5, 1, 1.5, 2, 2.5, 3, 3.5, 4, 4.5, 5, 5.5, 6, 6.5, 7, 7.5, 8, or a range between two of these values; and d may be 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, or a range between two of these values.

In addition, the lithium-aluminum-based oxide may have a peak detected in at least one region selected from the group consisting of 20 values of 23.7°±0.2°, 34°±0.2°, and 34.4°±0.2° in XRD analysis.

According to another aspect of the present specification, there is provided a positive electrode comprising the positive electrode active material described above.

According to still another aspect of the present specification, there is provided a lithium secondary battery using the positive electrode described above.

According to another aspect of the present invention, there is provided a positive electrode comprising the positive electrode active material described above.

According to still another aspect of the present invention, there is provided a lithium secondary battery using the positive electrode described above.

### BRIEF DESCRIPTION OF THE DRAWINGS

The objects, features, and advantages of the present disclosure will become more apparent from the following description of exemplary embodiments with reference to the accompanying drawings, in which:
FIG. 1 shows SEM-EDS analysis results of the positive electrode active material obtained in Preparation Example 1;
FIGS. 2 to 6 show TEM-EDS analysis results of the positive electrode active material obtained in Preparation Example 1; and
FIGS. 7 to 11 show XRD analysis results of the positive electrode active material obtained in Preparation Example 1.

### DETAILED DESCRIPTION OF EXEMPLARY EMBODIMENTS

For a better understanding of the present disclosure, certain terms are defined herein for convenience. Unless otherwise defined herein, scientific and technical terms used in the present disclosure will have meanings commonly understood by those skilled in the art. In addition, unless otherwise specified in the context, the singular should be understood to include the plural, and the plural should be understood to include the singular. Amounts or ratios indicated herein are molar amounts or molar ratios, unless otherwise specified in the context.

### Positive electrode active material

A positive electrode active material according to one aspect of the present disclosure comprises a lithium transition metal oxide containing lithium, nickel, and cobalt.

The lithium composite oxide is a metal composite oxide capable of intercalation/deintercalation of lithium ions and has a layered crystal structure belonging to the R-3m space group. The lithium composite oxide with a layered crystal structure has specific peaks in the 2θ region of 18° to 20° in the diffraction pattern obtained from XRD analysis.

In an embodiment, the lithium composite oxide comprises at least lithium, aluminum, and a transition metal. The transition metal may comprise at least one, at least two, or all selected from nickel, cobalt, and manganese.

In a non-limiting example, the lithium composite oxide may be a lithium nickel-based composite oxide containing nickel. In addition, the lithium composite oxide may be a lithium nickel-based composite oxide containing nickel and cobalt.

In order to improve the low rate performance and lifetime of LiNiO₂ while maintaining its high reversible capacity, the lithium nickel-based composite oxide may be a ternary lithium composite oxide such as the so-called NCM (Ni-Co-Mn) and NCA (Ni-Co-Al), in which part of the nickel is substituted with cobalt, manganese, and/or aluminum, or a quaternary lithium composite oxide such as NCMA (Ni-Co-Mn-Al). The ternary or quaternary lithium composite oxide may further comprise a dopant other than nickel, cobalt, manganese, and aluminum. In another embodiment of the present invention, the lithium nickel-based composite oxide may be a cobalt-free lithium composite oxide. The cobalt-free lithium composite oxide may further comprise a dopant other than nickel, cobalt, manganese, and aluminum.

Meanwhile, the lithium composite oxide may be present as primary particles, and a plurality of the primary particles may be aggregated to form secondary particles. Here, the primary particle refers to one grain or crystallite, and the secondary particle refers to an aggregate formed by aggregation of a plurality of primary particles.

Unless otherwise defined, the term "surface portion of a particle" used herein refers to a region relatively close to the "outermost surface" of the particle, and the "center of a particle" refers to a region relatively close to the "center" of the particle compared to the "surface portion."

Accordingly, the "surface portion of the primary particle" refers to a region relatively close to the "outermost surface" of the primary particle, and the "center of the primary particle" refers to a region relatively close to the "center" of the primary particle compared to the "surface portion."

Likewise, the "surface portion of the secondary particle" refers to a region relatively close to the "outermost surface" of the secondary particle, and the "center of the secondary particle" refers to a region relatively close to the "exact center" of the secondary particle compared to the "surface portion."

In this case, a region excluding the "surface portion of the particle" within an arbitrary particle may be defined as the "center portion of the particle."

The primary particles and the secondary particles may each independently have a rod shape, an elliptical shape, and/or an irregular shape. In addition, unless specifically intended during the manufacturing process, primary particles of various shapes may be present in the same positive electrode active material. In addition, the single particle or the primary particle refers to a particle unit in which no grain boundary appears when observed at a magnification of 5,000 to 20,000x using a scanning electron microscope.

A pore and/or a grain boundary may be present between the primary particles constituting the secondary particle. The primary particle may be spaced apart from a neighboring primary particle inside the secondary particle to form an internal pore. In addition, the primary particle may form a surface present inside the secondary particle by being in contact with the internal pore without being in contact with a neighboring primary particle to form a grain boundary. Meanwhile, the surface of the primary particle present at the outermost surface of the secondary particle that is exposed to the outside air forms the surface of the secondary particle.

Here, the average particle diameter of the primary particles (where the average particle diameter of the primary particles may be the average major axis length of the primary particles) is in the range of 0.1 to 5 µm, for example, 0.1 µm, 0.5 µm, 1 µm, 1.5 µm, 2 µm, 2.5 µm, 3 µm, 3.5 µm, 4 µm, 4.5 µm, 5 µm, or a range between two of these values, so that the optimum density of a positive electrode manufactured using the positive electrode active material according to various embodiments can be realized. The average particle diameter of the secondary particles in which a plurality of the primary particles are aggregated may vary depending on the number of aggregated primary particles, but is generally 30 to 40 µm, for example, 30 µm, 31 µm, 32 µm, 33 µm, 34 µm, 35 µm, 36 µm, 37 µm, 38 µm, 39 µm, 40 µm, or a range between two of these values. In another embodiment, the positive electrode active material may comprise a lithium composite compound present in the form of a single crystal having an average particle diameter of 0.1 µm or more.

In one or more of the primary particles, the Al element contained in the primary particle may exhibit a concentration gradient that decreases toward the center of the primary particle. That is, the concentration gradient of the Al element formed in the primary particle may be in a direction from the surface portion of the primary particle toward the center of the primary particle.

This type of concentration gradient may be formed by mixing the lithium composite oxide with a specific aluminum-based compound and then applying a predetermined heat treatment process.

Apart from this, at least a part of the Al element in the lithium composite oxide may be present in a doped state in the primary particle, in addition to exhibiting the above-described concentration gradient. In the present specification, being simply doped within a particle, forming a concentration gradient within a particle, and being present on the surface of a particle may be concepts that are distinguished from one another.

The characteristics exhibited by the Al element may be specified by various methods. For example, there is a method of confirmation through TEM-EDS analysis.

The lithium composite oxide into which Al is introduced suppresses excessive cation mixing of nickel to improve electrochemical stability, and the electron conduction and ion diffusion paths can be optimized.

Meanwhile, the concentration gradient exhibited by the Al element within the primary particle can improve the structural stability of the surface portion of the lithium composite oxide. The lithium composite oxide with improved structural stability can minimize degradation even during repeated charging/discharging.

That is, the concentration gradient of the Al element may be present only up to a predetermined depth from the surface of the primary particle. For example, when the diameter of the primary particle is r, the predetermined depth may be 0.001r, 0.002r, 0.003r, 0.004r, 0.005r, 0.006r, 0.007r, 0.008r, 0.009r, 0.01r, 0.011r, 0.012r, 0.013r, 0.014r, 0.015r, 0.016r, 0.017r, 0.018r, 0.019r, 0.02r, 0.021r, 0.022r, 0.023r, 0.024r, 0.025r, 0.026r, 0.027r, 0.028r, 0.029r, 0.03r, 0.035r, 0.04r, 0.045r, 0.05r, 0.055r, 0.06r, 0.065r, 0.07r, 0.075r, 0.08r, 0.085r, 0.09r, 0.095r, 0.1r, 0.105r, 0.11r, 0.115r, 0.12r, 0.125r, 0.13r, 0.135r, 0.14r, 0.145r, 0.15r, 0.155r, 0.16r, 0.165r, 0.17r, 0.175r, 0.18r, 0.185r, 0.19r, 0.195r, 0.2r, or a range between two of these values, but is not limited thereto.

In addition, the Al element concentration gradient formed up to a predetermined depth, that is, the concentration gradient layer, can relieve structural stress inside the particle to improve high-temperature stability.

The depth of the Al element concentration gradient formed in the major axis direction of the primary particle and the depth of the Al element concentration gradient formed in the minor axis direction of the primary particle may be different from or the same as each other.

Such characteristics can be controlled according to the manufacturing conditions for forming the Al element concentration gradient or the composition of the primary particle. The depth can affect the ion diffusion path, the reaction uniformity in the electrode, and the like. That is, the lithium composite oxide may be one in which the depth at which the Al element concentration gradient is formed is made the same or different depending on the direction so that the characteristics are adjusted to suit the intended product.

In an example, the depth D_{A} of the Al element concentration gradient formed in the major axis direction of the primary particle and the depth d_{A} of the Al element concentration gradient formed in the minor axis direction of the primary particle may satisfy Equation 1 below. [Equation 1] ${D}_{A} > {d}_{A}$

Such a primary particle may be one in which a relatively thick concentration gradient layer is formed in the major axis direction. Such characteristics can be controlled and imparted according to the arrangement of the primary particles within the secondary particle. For example, such characteristics can be imparted to a positive electrode active material having a shape in which degradation of the primary particles mainly occurs in the major axis direction.

In another example, the depth D_{A} of the Al element concentration gradient formed in the major axis direction of the primary particle and the depth d_{A} of the Al element concentration gradient formed in the minor axis direction of the primary particle may satisfy Equation 2 below. [Equation 2] ${D}_{A} < {d}_{A}$

Such a primary particle may be one in which a relatively thick concentration gradient layer is formed in the minor axis direction. Likewise, such characteristics can be controlled and imparted according to the arrangement of the primary particles within the secondary particle. For example, such characteristics can be imparted to a positive electrode active material having a shape in which degradation of the primary particles mainly occurs in the minor axis direction.

Meanwhile, the thickness of the Al concentration gradient layer may be controlled according to the position of the primary particle within the secondary particle. That is, the thickness of the concentration gradient layer at a position close to the surface portion of the secondary particle and at a position close to the center of the secondary particle may be made different. For example, the concentration gradient layer may be thicker at a position close to the surface portion of the secondary particle, or the concentration gradient layer may be thicker at a position close to the center of the secondary particle.

The thickness of such a concentration gradient layer can be controlled by varying the type of aluminum-based compound used to form it or by changing the heat treatment conditions.

In another example, the thickness of the concentration gradient layer may be 0.1 to 200 nm, for example, 0.1 nm, 0.5 nm, 1 nm, 1.5 nm, 2 nm, 2.5 nm, 3 nm, 3.5 nm, 4 nm, 4.5 nm, 5 nm, 5.5 nm, 6 nm, 6.5 nm, 7 nm, 7.5 nm, 8 nm, 8.5 nm, 9 nm, 9.5 nm, 10 nm, 10.5 nm, 11 nm, 11.5 nm, 12 nm, 12.5 nm, 13 nm, 13.5 nm, 14 nm, 14.5 nm, 15 nm, 15.5 nm, 16 nm, 16.5 nm, 17 nm, 17.5 nm, 18 nm, 18.5 nm, 19 nm, 19.5 nm, 20 nm, 20.5 nm, 21 nm, 21.5 nm, 22 nm, 22.5 nm, 23 nm, 23.5 nm, 24 nm, 24.5 nm, 25 nm, 25.5 nm, 26 nm, 26.5 nm, 27 nm, 27.5 nm, 28 nm, 28.5 nm, 29 nm, 29.5 nm, 30 nm, 40 nm, 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, 200 nm, or a range between two of these values, but is not limited thereto.

Meanwhile, in one or more of the primary particles, a region in which the Al element is concentrated may be present at a depth of 0.1 to 200 nm from the surface of the primary particle toward the center of the primary particle, for example, 0.1 nm, 0.5 nm, 1 nm, 1.5 nm, 2 nm, 2.5 nm, 3 nm, 3.5 nm, 4 nm, 4.5 nm, 5 nm, 5.5 nm, 6 nm, 6.5 nm, 7 nm, 7.5 nm, 8 nm, 8.5 nm, 9 nm, 9.5 nm, 10 nm, 10.5 nm, 11 nm, 11.5 nm, 12 nm, 12.5 nm, 13 nm, 13.5 nm, 14 nm, 14.5 nm, 15 nm, 15.5 nm, 16 nm, 16.5 nm, 17 nm, 17.5 nm, 18 nm, 18.5 nm, 19 nm, 19.5 nm, 20 nm, 20.5 nm, 21 nm, 21.5 nm, 22 nm, 22.5 nm, 23 nm, 23.5 nm, 24 nm, 24.5 nm, 25 nm, 25.5 nm, 26 nm, 26.5 nm, 27 nm, 27.5 nm, 28 nm, 28.5 nm, 29 nm, 29.5 nm, 30 nm, 40 nm, 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, 200 nm, or a range between two of these values.

Here, the region in which the Al element is concentrated may refer to a specific region exhibiting an Al element content higher than that of other regions in the primary particle beyond the measurement error.

Meanwhile, due to the concentration gradient formed by the Al element, at least one of the transition metal elements constituting the lithium composite oxide may exhibit a concentration gradient that increases from the surface toward the center.

Therefore, the concentration gradient of the transition metal element may be present only up to a predetermined depth from the surface of the primary particle. For example, when the diameter of the primary particle is r, the predetermined depth may be 0.001r, 0.002r, 0.003r, 0.004r, 0.005r, 0.006r, 0.007r, 0.008r, 0.009r, 0.01r, 0.011r, 0.012r, 0.013r, 0.014r, 0.015r, 0.016r, 0.017r, 0.018r, 0.019r, 0.02r, 0.021r, 0.022r, 0.023r, 0.024r, 0.025r, 0.026r, 0.027r, 0.028r, 0.029r, 0.03r, 0.035r, 0.04r, 0.045r, 0.05r, 0.055r, 0.06r, 0.065r, 0.07r, 0.075r, 0.08r, 0.085r, 0.09r, 0.095r, 0.1r, 0.105r, 0.11r, 0.115r, 0.12r, 0.125r, 0.13r, 0.135r, 0.14r, 0.145r, 0.15r, 0.155r, 0.16r, 0.165r, 0.17r, 0.175r, 0.18r, 0.185r, 0.19r, 0.195r, 0.2r, or a range between two of these values, but is not limited thereto.

Meanwhile, in an example, the average particle diameter (D₅₀) of the primary particles may be 200 to 2,000 nm, for example, 200 nm, 225 nm, 250 nm, 275 nm, 300 nm, 325 nm, 350 nm, 375 nm, 400 nm, 425 nm, 450 nm, 475 nm, 500 nm, 525 nm, 550 nm, 575 nm, 600 nm, 625 nm, 650 nm, 675 nm, 700 nm, 725 nm, 750 nm, 775 nm, 800 nm, 825 nm, 850 nm, 875 nm, 900 nm, 925 nm, 950 nm, 975 nm, 1,000 nm, 1,025 nm, 1,050 nm, 1,075 nm, 1,100 nm, 1,125 nm, 1,150 nm, 1,175 nm, 1,200 nm, 1,225 nm, 1,250 nm, 1,275 nm, 1,300 nm, 1,325 nm, 1,350 nm, 1,375 nm, 1,400 nm, 1,425 nm, 1,450 nm, 1,475 nm, 1,500 nm, 1,525 nm, 1,550 nm, 1,575 nm, 1,600 nm, 1,625 nm, 1,650 nm, 1,675 nm, 1,700 nm, 1,725 nm, 1,750 nm, 1,775 nm, 1,800 nm, 1,825 nm, 1,850 nm, 1,875 nm, 1,900 nm, 1,925 nm, 1,950 nm, 1,975 nm, 2,000 nm, or a range between two of these values.

The average particle diameter (D₅₀) of the primary particles may be the average value of the length of the primary particles in the major axis direction and the length of the primary particles in the minor axis direction ([major axis length + minor axis length]/2). The average particle diameter of the primary particles may be calculated as the average value of the particle diameters of all primary particles observed from a surface SEM image and/or a cross-sectional SEM image of the lithium composite oxide.

When the average particle diameter of the primary particles is too small, the specific surface area of the positive electrode active material becomes excessively large, which may cause a decrease in stability due to side reactions with the electrolyte. On the other hand, when the average particle diameter of the primary particles is too large, the diffusibility of lithium ions may rather be reduced.

In addition, the particle size distribution of the lithium composite oxide in the positive electrode active material may be measured using a laser diffraction method. For example, after dispersing secondary particles in a dispersion medium and irradiating the same with ultrasonic waves at about 28 kHz at an output of 60 W using a commercially available laser diffraction particle size measurement device (such as Microtrac MT 3000), a volume cumulative particle size distribution graph is obtained, and the particle size corresponding to 50% of the volume cumulative amount can be defined as the average particle diameter (D₅₀).

Herein, "particle size" is used with the same meaning as "particle diameter," and unless otherwise defined, all "average particle diameters" refer to the particle size corresponding to 50% of the volume cumulative amount determined by the laser diffraction method described above.

In an embodiment, the lithium composite oxide may be represented by Chemical Formula 1 below:

[Chemical Formula 1] Li_{w}Ni_{1-(x+y+z)}M1ₓM2_{y}Al_{z}O₂

In Chemical Formula 1, M1 is at least one selected from Co and Mn, M2 is at least one selected from Na, K, Mg, Ba, B, Ce, Hf, Ta, Cr, F, Ti, V, Fe, Zr, Zn, Si, Y, Nb, Ga, Sn, Mo, W, P, Sr, Ge, Nd, Gd, and Cu, and 0.5≤w≤1.5, 0<x≤0.34, 0≤y≤0.20, 0<z≤0.33.

Here, w, which represents the ratio of lithium to all elements excluding lithium in the lithium composite oxide, may be 0.50, 0.55, 0.60, 0.65, 0.70, 0.75, 0.80, 0.85, 0.90, 0.95, 1.00, 1.05, 1.10, 1.15, 1.20, 1.25, 1.30, 1.35, 1.40, 1.45, 1.50, or a range between two of these values.

Meanwhile, 1-(x+y+z), which represents the ratio of nickel to all elements excluding lithium in the lithium composite oxide, may be 0.03, 0.06, 0.09, 0.12, 0.15, 0.18, 0.21, 0.24, 0.27, 0.3, 0.33, 0.36, 0.39, 0.42, 0.45, 0.48, 0.51, 0.54, 0.57, 0.6, 0.63, 0.66, 0.69, 0.72, 0.75, 0.78, 0.81, 0.84, 0.87, 0.9, 0.93, 0.96, 0.99, or a range between two of these values, but is not limited thereto.

In Chemical Formula 1, M1 refers to Co and/or Mn present in the lithium composite oxide. x, which represents the ratio of M1 to all elements excluding lithium in the lithium composite oxide, may be 0.01, 0.04, 0.07, 0.10, 0.13, 0.16, 0.19, 0.22, 0.25, 0.28, 0.31, 0.34, or a range between two of these values.

In Chemical Formula 1, M2 refers to a dopant other than aluminum doped in the lithium composite oxide. The dopant may be present in a doped state in the crystal lattice (at least one of the lithium layer and/or the transition metal layer) of the lithium composite oxide. y, which represents the ratio of M2 to all elements excluding lithium in the lithium composite oxide, may be 0.00, 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, or a range between two of these values.

When the lithium composite oxide comprises a dopant, y in Chemical Formula 1 is greater than 0, and when the lithium composite oxide does not comprise a dopant, y in Chemical Formula 1 is 0.

z, which represents the ratio of aluminum to all elements excluding lithium in the lithium composite oxide, may be 0.01, 0.04, 0.07, 0.10, 0.13, 0.16, 0.19, 0.22, 0.25, 0.28, 0.31, 0.33, or a range between two of these values.

The upper and lower limits of the contents of nickel, M1, the dopant M2, and aluminum defined in Chemical Formula 1 may be appropriately selected within a range that satisfies the above-described definitions.

In an example, the lithium composite oxide may be one in which a coating layer comprising lithium and aluminum is formed on at least a part of the surface of one or more of the secondary particles.

The coating layer can suppress a degradation reaction that may occur at the interface between the electrode and the electrolyte to improve structural stability under high-temperature conditions.

The coating layer may be defined as a region in which an aluminum-based oxide and/or a lithium-aluminum-based oxide is present independently of the lithium composite oxide.

That is, a coating layer of a thin thickness comprising lithium and aluminum may be formed on at least a part of the surface of one or more of the secondary particles. That is, an aluminum-based oxide and/or a lithium-aluminum-based oxide may be present on at least a part of the surface of one or more of the secondary particles. For example, the thickness of the coating layer may be 3 nm, 3.5 nm, 4 nm, 4.5 nm, 5 nm, 5.5 nm, 6 nm, 6.5 nm, 7 nm, 7.5 nm, 8 nm, 8.5 nm, 9 nm, 9.5 nm, 10 nm, 10.5 nm, 11 nm, 11.5 nm, 12 nm, 12.5 nm, 13 nm, 13.5 nm, 14 nm, 14.5 nm, 15 nm, 15.5 nm, 16 nm, 16.5 nm, 17 nm, 17.5 nm, 18 nm, 18.5 nm, 19 nm, 19.5 nm, 20 nm, 20.5 nm, 21 nm, 21.5 nm, 22 nm, 22.5 nm, 23 nm, 23.5 nm, 24 nm, 24.5 nm, 25 nm, 27.5 nm, 30 nm, 32.5 nm, 35 nm, 37.5 nm, 40 nm, 42.5 nm, 45 nm, 47.5 nm, 50 nm, 75 nm, 100 nm, 125 nm, 150 nm, 175 nm, 200 nm, 225 nm, 250 nm, 275 nm, 300 nm, 325 nm, 350 nm, 375 nm, 400 nm, 425 nm, 450 nm, 475 nm, 500 nm, or a range between two of these values, but is not limited thereto.

The coating layer can improve the interfacial stability of the lithium composite oxide. Under high-voltage conditions, the electrolyte may be easily oxidized and decomposed on the surface of the lithium composite oxide, which may cause an increase in interfacial resistance. The coating layer can reduce direct contact between the electrolyte and the lithium composite oxide to suppress such decomposition of the electrolyte.

Meanwhile, the coating layer can improve the structural stability of the lithium composite oxide to prevent structural collapse caused by elution of constituent elements into the electrolyte.

Depending on the temperature at which the coating layer is formed, it may comprise various phases containing lithium, aluminum, oxygen, and the like. For example, it may comprise a phase such as Li₅AlO₄, but is not limited thereto.

Here, the coating layer may comprise a lithium-aluminum-based oxide represented by Chemical Formula 2 below:

[Chemical Formula 2] LiₐAl_{b}M3_{c}O_{d}

In Chemical Formula 2, M3 is at least one selected from Ni, Mn, Co, Fe, Cu, Nb, Mo, Ti, W, Cr, Zr, Zn, Na, K, Ca, Mg, Pt, Au, B, P, Eu, Sm, Ce, V, Ba, Ta, Sn, Hf, Ce, Gd, and Nd, and 0<a≤10, 0<b≤8, 0≤c≤8, 2≤d≤13.

Here, the aluminum-based oxide can react with lithium impurities to form a lithium-aluminum-based oxide, and a, which represents the ratio thereof, may be 0.01, 0.5, 1, 1.5, 2, 2.5, 3, 3.5, 4, 4.5, 5, 5.5, 6, 6.5, 7, 7.5, 8, 8.5, 9, 9.5, 10, or a range between two of these values.

b, which represents the ratio of aluminum in the coating layer, may be 0.01, 0.5, 1, 1.5, 2, 2.5, 3, 3.5, 4, 4.5, 5, 5.5, 6, 6.5, 7, 7.5, 8, or a range between two of these values.

M3 may refer to another component introduced in addition to the aluminum-based oxide when the coating layer is formed, and c, which represents the ratio thereof, may be 0, 0.5, 1, 1.5, 2, 2.5, 3, 3.5, 4, 4.5, 5, 5.5, 6, 6.5, 7, 7.5, 8, or a range between two of these values. When there is no component introduced in addition to the aluminum-based oxide, c may be 0.

d may be 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, or a range between two of these values, and may be determined according to the stoichiometric ratio of Li, Al, and M3.

The upper and lower limits of the contents of lithium, aluminum, and M3 defined in Chemical Formula 2 may be appropriately selected within a range that satisfies the above-described definitions.

In addition, during the formation of the coating layer, residual lithium may react with the aluminum-based oxide to form a lithium-aluminum-based oxide. As a result, the content of residual lithium present on the surface of the lithium composite oxide can be reduced.

In an example, the lithium-aluminum-based oxide may have a peak detected in at least one region selected from the group consisting of 20 values of 23.7°±0.2°, 34°±0.2°, and 34.4°±0.2° in XRD analysis.

The lithium-aluminum-based oxide exhibiting at least one of the peaks is formed in a heat treatment process of 680 to 900 °C to improve the high-temperature lifetime, resistance, rate performance, and the like of the positive electrode active material, but may be easily removed by washing or the like.

When the positive electrode active material has primary particles in which the Al element is doped within the particle and which are provided with an Al element concentration gradient layer, and secondary particles on which a coating layer comprising a lithium-aluminum-based oxide is formed, it is possible to suppress excessive cation mixing of nickel, relieve structural stress inside the particle, and suppress a degradation reaction at the electrode-electrolyte interface to secure structural stability. In addition, the electron conductivity and the ion diffusion path are optimized to reduce resistance, and as a result, the performance under high-output conditions can be improved.

### Lithium secondary battery

According to another aspect of the present disclosure, there is provided a positive electrode including a positive electrode current collector and a positive electrode active material layer formed on the positive electrode current collector. The positive electrode active material layer may include the positive electrode active material according to various embodiments of the present disclosure. Since the content of positive electrode active material is the same as described above, detailed description will be omitted for convenience, and only the remaining components not described above will be described below.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and optionally as needed, a binder.

Here, the positive electrode active material is included at 80 to 99 wt%, and specifically, 85 to 98.5 wt% with respect to the total weight of a positive electrode slurry for forming the positive electrode active material layer. When the positive electrode active material is included in the above content range, excellent capacity characteristics may be exhibited, but the present disclosure is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Moreover, still another aspect of the present disclosure provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and a liquid electrolyte, which are interposed between the positive electrode and the negative electrode. Here, since the positive electrode is the same as described above, for convenience, detailed description of the positive electrode will be omitted, and other components which have not been described above will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined coke, or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of a negative electrode slurry for forming the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has low resistance to ion mobility of a liquid electrolyte and an excellent electrolyte solution impregnability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present disclosure may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present disclosure is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, since the electrolyte has suitable conductivity and viscosity, the electrolyte solution can exhibit excellent electrolytic performance and lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element Wherein, X is at least one selected from P, As, Sb, Si, Ge, Sn, B, Al, Ga and In) and S may be used. Examples of the sulfide-based solid electrolyte material may include Li₂S-P₂S₅, Li₂S-P₂S-LiX (wherein, X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein, m and n are integers, and Z is Ge, Zn or Ga), Li₂S-GeS₂, Li₂S-SiS₂-Li₃PO₄, and Li₂S-SiS₂-LiₚMO_{q} (wherein, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present disclosure stably exhibits an excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present disclosure is not particularly limited, but may be a cylindrical, prismatic, pouch or coin type. In addition, the lithium secondary battery may be used in a battery cell that is not only used as a power source of a small device, but also preferably used as a unit battery for a medium-to-large battery module including a plurality of battery cells.

According to still another exemplary embodiment of the present disclosure, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present disclosure will be described in further detail with reference to examples. However, these examples are merely provided to exemplify the present disclosure, and thus the scope of the present disclosure will not be construed to be limited by these examples.

### Preparation Example 1. Preparation of positive electrode active material

### (1) Example 1

A Ni_{0.92}Co_{0.04}Mn_{0.04}(OH)₂ hydroxide precursor was synthesized through a coprecipitation method. 25 wt% of NaOH and 30 wt% of NH₄OH were added to a 1.5 M composite transition metal sulfate aqueous solution in which nickel sulfate, cobalt sulfate, and manganese sulfate were mixed at a molar ratio of 92:4:4 in a 90 L reactor. The pH inside the reactor was maintained at 11.5, the temperature was maintained at 60 °C, and N₂, an inert gas, was introduced into the reactor to prevent the prepared precursor from being oxidized. After completion of synthesis stirring, washing and dehydration were performed using filter press (F/P) equipment to obtain a Ni_{0.92}Co_{0.04}Mn_{0.04}(OH)₂ hydroxide precursor.

LiOH was mixed with the synthesized precursor such that a molar ratio (Li/M) between lithium and metals excluding lithium was 1.065. The mixture was heated to a maximum temperature of 720 °C at a rate of 1 °C/min in a furnace in an O₂ atmosphere, heat-treated for 10 hours, and then naturally cooled to obtain an intermediate product (lithium composite oxide).

Subsequently, the intermediate product and Al(OH)₃ (weighed so that a content of aluminum was 2 mol% relative to all transition metals in the intermediate product) were mixed, heat-treated at 710 °C for 10 hours and 35 minutes at a rate of 1 °C/min in a furnace in an O₂ atmosphere, and then naturally cooled to obtain a final positive electrode active material product in which a coating layer comprising aluminum was formed on the surfaces of secondary particles.

### (2) Example 2

A Ni_{0.92}Co_{0.04}Mn_{0.04}(OH)₂ hydroxide precursor was synthesized through a coprecipitation method. 25 wt% of NaOH and 30 wt% of NH₄OH were added to a 1.5 M composite transition metal sulfate aqueous solution in which nickel sulfate, cobalt sulfate, and manganese sulfate were mixed at a molar ratio of 92:4:4 in a 90 L reactor. The pH inside the reactor was maintained at 11.5, the temperature was maintained at 60 °C, and N₂, an inert gas, was introduced into the reactor to prevent the prepared precursor from being oxidized. After completion of synthesis stirring, washing and dehydration were performed using filter press (F/P) equipment to obtain a Ni_{0.92}Co_{0.04}Mn_{0.04}(OH)₂ hydroxide precursor.

LiOH was mixed with the synthesized precursor such that a molar ratio (Li/M) between lithium and metals excluding lithium was 1.065. The mixture was heated to a maximum temperature of 720 °C at a rate of 1 °C/min in a furnace in an O₂ atmosphere, heat-treated for 10 hours, and then naturally cooled to obtain an intermediate product (lithium composite oxide).

Subsequently, the intermediate product and Al(OH)₃ (weighed so that the content of aluminum was 4 mol% relative to all transition metals in the intermediate product) were mixed, heat-treated at 710 °C for 10 hours and 35 minutes at a rate of 1 °C/min in a furnace in an O₂ atmosphere, and then naturally cooled to obtain a final positive electrode active material product in which a coating layer comprising aluminum was formed on the surfaces of secondary particles.

### (3) Comparative Example 1

A final positive electrode active material product was obtained in the same manner as in Example 1 except that Al(OH)₃ was not mixed.

### (4) Comparative Example 2

A final positive electrode active material product was obtained in the same manner as in Example 1 except that Al(OH)₃ was weighed so that the content of aluminum was 1 mol% relative to all transition metals in the intermediate product.

### (5) Comparative Example 3

Distilled water was prepared, and after maintaining the distilled water constantly at 5 to 40 °C, the final product prepared in Example 1 was added to the same weight of distilled water and washed with water for 2 hours while maintaining the temperature. Subsequently, filter press drying was performed to obtain a final positive electrode active material product.

### Preparation Example 2. Manufacture of lithium secondary battery (half-cell)

94 wt% of each positive electrode active material prepared according to Preparation Example 1, 3 wt% of carbon black, and 3 wt% of a PVDF binder were dispersed in 30 g of N-methyl-2 pyrrolidone (NMP) to prepare a positive electrode slurry. The positive electrode slurry was uniformly applied on an aluminum thin film with a thickness of 15 um and vacuum dried at 135 °C to manufacture a positive electrode for a lithium secondary battery.

A half-cell was manufactured using a lithium foil as a counter electrode to the positive electrode, a porous polyethylene membrane (Celgard 2300, thickness: 25 um) as a separator, and an electrolyte in which LiPF₆ was dissolved at a concentration of 1.15 M in a mixed solvent of ethylene carbonate and ethyl methyl carbonate at a volume ratio of 3:7.

### Experimental Example 1. Surface characteristic analysis of positive electrode active material

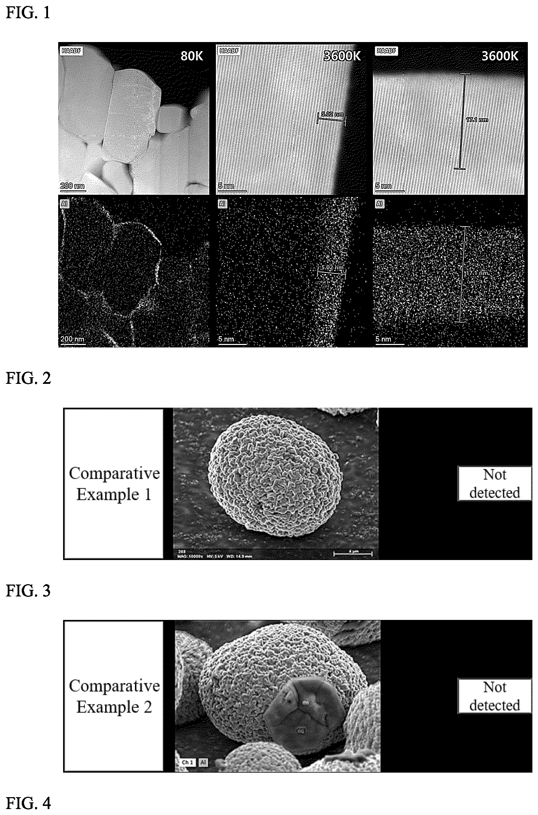

FIG. 1 shows a cross-sectional TEM-EDS photograph obtained after cross-sectioning the positive electrode active material of Example 1 prepared in Preparation Example 1 with a FIB (Focused Ion Beam).

The SEM-EDS analysis results of the positive electrode active material of Example 1 obtained in Preparation Example 1 are shown in FIGS. 2 to 6.

Referring to FIG. 1, as a result of EDS analysis, it can be confirmed that the aluminum concentration decreases from the surface of the interior of the primary particle toward the particle center direction.

More specifically, a concentration gradient layer having a thin thickness was formed on the positive electrode active material, and a portion of aluminum was doped inside the lithium composite oxide by diffusion. Referring to FIG. 1, it can be confirmed that a concentration gradient layer of 5.02 nm in the minor axis direction of the primary particle and 17.1 nm in the major axis direction thereof was formed.

Meanwhile, referring to FIGS. 2 to 6, in Comparative Example 1 and Comparative Example 2 in which the aluminum raw material was not applied or was applied in only a small amount, aluminum was not doped inside the lithium composite oxide.

In Comparative Example 3 in which a sufficient amount of the aluminum raw material was applied but the water-washing process was applied, the aluminum coating layer did not exist. In addition, in Comparative Example 2, aluminum existed only in a partial region of the surface of the secondary particle, but in the secondary particles of Example 1 and Example 2, an aluminum coating layer was formed entirely on the surface.

Such an aluminum coating layer is expected to include a compound formed by a reaction of the aluminum raw material with residual lithium impurities on the surface of the secondary particle.

### Experimental Example 2. Crystallographic characteristic analysis of positive electrode active material

X-ray diffraction (XRD) analysis was performed on each positive electrode active material prepared according to Preparation Example 1 to analyze crystallographic characteristics of the positive electrode active material.

Specifically, the XRD analysis was performed through a Bruker D8E Endeavor diffractometer using Cu-Ka radiation (1.540598 Å) under conditions of a tube voltage of 45 kV, a tube current of 30 mA, and a step size of 0.02°. A surface crystal phase was defined by referring to an ICDD XRD standard data card from a diffraction spectrum obtained through X-ray diffraction (XRD) analysis using Cu-Ka rays for the positive electrode active material. For example, the beta-Li₅AlO₄ phase exhibits diffraction peaks (PDF 00-027-1209) detected at 23.71° ± 0.2°, 33.97° ± 0.2°, and 34.40° ± 0.2°.

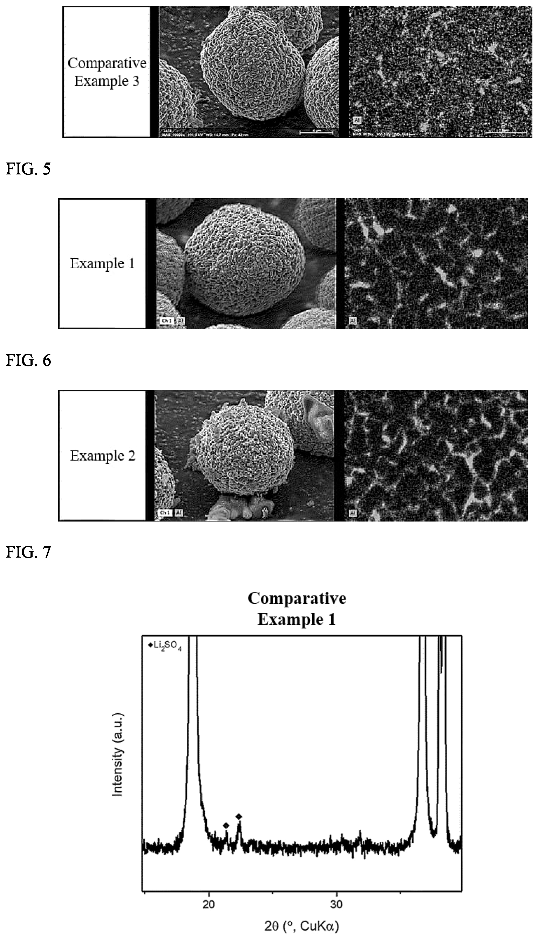

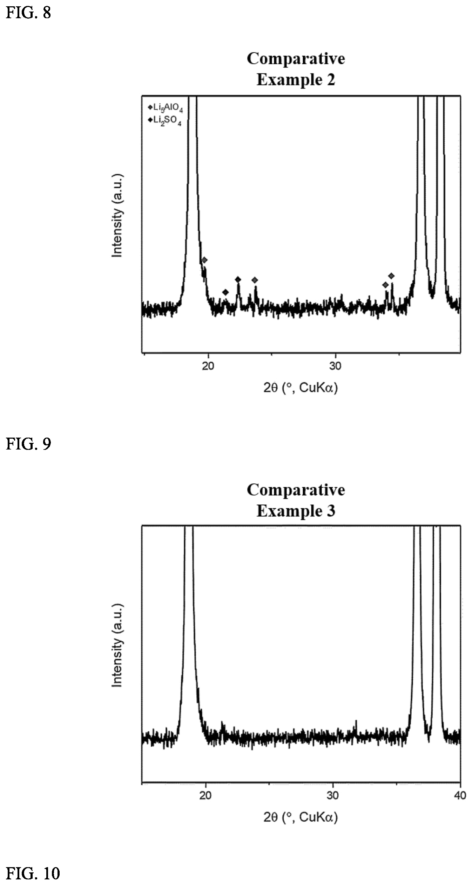

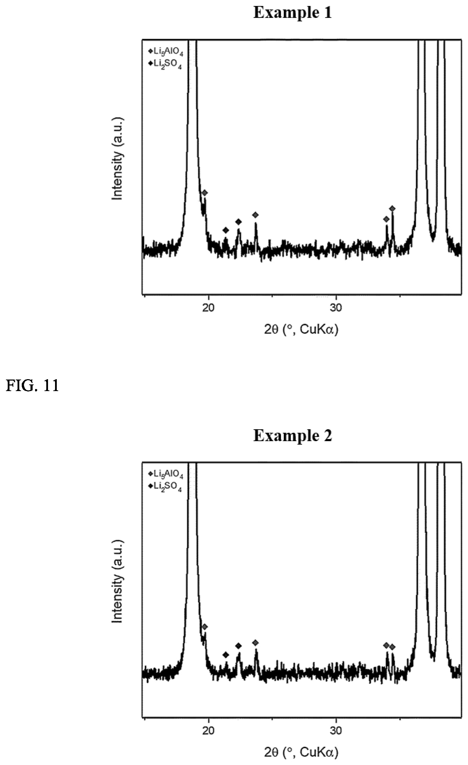

The XRD analysis results are shown in Table 1 below and FIGS. 7 to 11.

**[Table 1]**

| Classification | Al content (mol%) | Water washing | Concentration gradient thickness (nm) | Surface coating layer |
|---|---|---|---|---|
| Comparative Example 1 | 0 | - | - | - |
| Comparative Example 2 | 1 | - | - | Li₃AlO₄ |
| Comparative Example 3 | 2 | O | <100 | - |
| Example 1 | 2 | - | <100 | Li₅AlO₄ |
| Example 2 | 4 | - | <200 | Li₅AlO₄ |

Referring to the results in Table 1, it can be confirmed that the surface crystal phase changes depending on the content of the Al raw material and whether or not water washing is performed. In addition, it was confirmed that the thickness of the intra-granular concentration gradient varies depending on the content of the Al raw material. For example, in Comparative Example 2 in which the Al content used was 1 mol%, a coating layer on the surface of the secondary particle was formed, but a concentration gradient layer inside the primary particle was not formed.

Meanwhile, from Comparative Example 3, it was confirmed that the β-LisAlO₄ phase formed in the heat treatment process at 680 to 900 °C is easily dissolved and lost upon contact with water.

### Experimental Example 3. Evaluation of electrochemical properties of lithium secondary battery (half-cell)

For the lithium secondary batteries (half-cell) manufactured in Preparation Example 2, charge/discharge was performed 50 times using an electrochemical analysis device (Toscat-3100 from Toyo) at 45 °C and a constant current of 0.05C within an operating voltage of 2.5 to 4.25 V to confirm high-temperature lifespan characteristics. At this time, a ratio of the discharge capacity at the 50th cycle to the initial capacity after performing charge/discharge 50 times was defined as a high-temperature cycle capacity retention.

In addition, batteries charged at 0.2C at 25 °C were discharged at 0.2C, 0.5C, 1C, 2C, 3C, and 4C, respectively, to confirm output (rate) characteristics. A ratio (C_{f}/Cᵢ x 100) of the 0.2C capacity (C_{f}) after the completion of the output (rate) characteristic test to the initial 0.2C capacity (Cᵢ) was defined as a capacity retention.

The measurement results are shown in Table 2 and Table 3 below.

**[Table 2]**

| Classification | Initial charge capacity (mAh/g) | 50th discharge capacity (mAh/g) | High-temperature cycle capacity retention (%) | R_{ct} resistance (Ω |
|---|---|---|---|---|
| Example 1 | 209 | 107 | 51 | 12.64 |
| Example 2 | 208 | 98 | 47 | 13.26 |
| Comparative Example 1 | 201 | 80 | 40 | 14.33 |
| Comparative Example 2 | 209 | 85 | 41 | 15.42 |
| Comparative Example 3 | 209 | 92 | 44 | 14.03 |

**[Table 3]**

| Classification | 0.2C (mAh/g) | 0.5C (mAh/g) | 1C (mAh/g) | 2C (mAh/g) | 3C (mAh/g) | 4C (mAh/g) | Capacity retention (%) |
|---|---|---|---|---|---|---|---|
| Example 1 | 201 | 195 | 191 | 186 | 184 | 181 | 99.5 |
| Example 2 | 200 | 194 | 190 | 186 | 183 | 181 | 99.6 |
| Comparative Example 1 | 190 | 185 | 180 | 175 | 172 | 170 | 98.1 |
| Comparative Example 2 | 200 | 194 | 189 | 185 | 182 | 180 | 99.1 |
| Comparative Example 3 | 200 | 191 | 186 | 180 | 178 | 174 | 98.6 |

Referring to Table 2 and Table 3, compared to Examples in which the concentration gradient layer inside the primary particle and the coating layer on the surface of the secondary particle were formed, Comparative Examples in which the coating layer did not exist or the aluminum-based compound existed only inside or on the surface of the particles showed insufficient high-temperature lifespan, resistance, and rate characteristics.

According to the present specification, a concentration gradient of Al is formed in a region close to the surface of the primary particles constituting the lithium composite oxide, so that the structural stability of the surface of the lithium composite oxide particles can be improved.

In an example, a lithium-aluminum-based oxide coating layer is formed on at least a part of the surface of the lithium composite oxide, so that residual lithium can be reduced.

In addition to the above-described effects, specific effects of the present disclosure are described while explaining specific details for the present disclosure below.

Although embodiments of the present disclosure have been described above, those skilled in the art can make various modifications and changes to the present disclosure by adding, changing, or deleting components without departing from the spirit of the present disclosure as set forth in the claims, which will be included within the scope of rights of the present disclosure.

## Claims

1. A positive electrode active material comprising:
a lithium composite oxide capable of intercalation/deintercalation of lithium,
wherein the lithium composite oxide comprises at least lithium, aluminum, and a transition metal,
wherein the lithium composite oxide is a secondary particle in which a plurality of primary particles are aggregated, and
wherein an Al element contained in one or more of the primary particles exhibits a concentration gradient that decreases toward a center of the primary particle.

2. The positive electrode active material of claim 1, wherein at least a part of the Al element in the lithium composite oxide is present in a doped state in the primary particles.

3. The positive electrode active material of claim 1, wherein the concentration gradient of the Al element is present only up to a predetermined depth from a surface of the primary particle.

4. The positive electrode active material of claim 3, wherein the depth of the concentration gradient of the Al element formed in the major axis direction of the primary particle and the depth of the concentration gradient of the Al element formed in the minor axis direction of the primary particle are different from or same to each other.

5. The positive electrode active material of claim 1, wherein in the primary particle, the thickness of the concentration gradient layer in which the Al element exhibits a concentration gradient decreasing toward the center of the primary particle is 0.1 to 200 nm.

6. The positive electrode active material of claim 1, wherein in one or more of the primary particles, a region in which the Al element is concentrated is present at a depth of 0.1 to 200 nm from the surface of the primary particles toward the center direction of the primary particles.

7. The positive electrode active material of claim 1, wherein in one or more of the primary particles, at least one of the transition metal elements excluding the Al element exhibits a concentration gradient that increases toward the center of the primary particles.

8. The positive electrode active material of claim 7, wherein the concentration gradient of the transition metal element is present only up to a predetermined depth from the surface of the primary particles.

9. The positive electrode active material of claim 1, wherein an average particle diameter (D₅₀) of the primary particles is 200 to 2,000 nm.

10. The positive electrode active material of claim 1, wherein the lithium composite oxide is represented by Chemical Formula 1 below:
[Chemical Formula 1] Li_{w}Ni_{1-(x+y+z)}M1ₓM2_{y}Al_{z}O₂
wherein,
M1 is at least one selected from Co and Mn,
M2 is at least one selected from Na, K, Mg, Ba, B, Ce, Hf, Ta, Cr, F, Ti, V, Fe, Zr, Zn, Si, Y, Nb, Ga, Sn, Mo, W, P, Sr, Ge, Nd, Gd, and Cu, and
0.5≤w≤1.5, 0<x≤0.34, 0≤y≤0.20, and 0<z≤0.33.

11. The positive electrode active material of claim 1, wherein a coating layer comprising lithium and aluminum is formed on at least a portion of a surface of one or more of the secondary particles.

12. The positive electrode active material of claim 11, wherein the coating layer comprises a lithium-aluminum-based oxide represented by Chemical Formula 2 below:
[Chemical Formula 2] LiₐAl_{b}M3_{c}O_{d}
wherein,
M3 is at least one selected from Ni, Mn, Co, Fe, Cu, Nb, Mo, Ti, W, Cr, Zr, Zn, Na, K, Ca, Mg, Pt, Au, B, P, Eu, Sm, Ce, V, Ba, Ta, Sn, Hf, Ce, Gd, and Nd, and
0<a≤10, 0<b≤8, 0≤c≤8, and 2≤d≤13.

13. The positive electrode active material of claim 12, wherein the lithium-aluminum-based oxide is one in which a peak is detected in at least one region selected from the group consisting of 2θ values of 23.7° ± 0.2°, 34° ± 0.2°, and 34.4° ± 0.2° in XRD analysis.

14. A positive electrode comprising the positive electrode active material according to any one of claims 1 to 13.

15. A lithium secondary battery using the positive electrode according to claim 13.
